# EUROPÄISCHE PATENTSCHRIFT

(11) **EP 2 304 392 B1**
(45) Veröffentlichungstag und Bekanntmachung des Hinweises auf die Patenterteilung: **30.11.2011**
(21) Anmeldenummer: 09780333.2
(22) Anmeldetag: 08.07.2009
(51) Int. Cl.: G01F 1/68, G01F 1/696

(54) **VORRICHTUNG ZUR THERMISCHEN MASSENSTROMMESSUNG, INSBESONDERE ZUR MESSUNG DER EINER BRENNKRAFTMASCHINE ZUGEFÜHRTEN LUFTMASSE**
DEVICE FOR THERMAL MASS FLOW MEASUREMENT, PARTICULARLY FOR MEASURING AN AIR MASS BEING SUPPLIED TO AN INTERNAL COMBUSTION ENGINE
DISPOSITIF DE MESURE THERMIQUE DE FLUX MASSIQUE, EN PARTICULIER POUR MESURER LE FLUX MASSIQUE D'AIR ADMIS DANS UN MOTEUR À COMBUSTION INTERNE

(30) Priorität: 09.07.2008 DE 102008032300
(43) Veröffentlichungstag der Anmeldung: 06.04.2011
(73) Patentinhaber: Continental Automotive GmbH, 30165 Hannover (DE)
(72) Erfinder: ACHHAMMER, Roland, 93176 Beratzhausen (DE); LAUERER, Wolfgang, 93164 Laaber (DE)
(86) Internationale Anmeldenummer: PCT/EP2009/058690
(87) Internationale Veröffentlichungsnummer: WO 2010/003987

(56) Entgegenhaltungen:
- FR-A- 2 538 899
- US-A- 3 995 481
- US-A- 4 279 146
- US-A- 4 688 424

## Beschreibung

Die vorliegende Erfindung betrifft eine Vorrichtung zur thermischen Massenstrommessung, insbesondere zur Messung der einer Brennkraftmaschine zugeführten Luftmasse nach Anspruch 1.

Bei der thermischen Anemometrie wird ein Sensorelement, dessen elektrischer Widerstand von der Temperatur abhängt, elektrisch beheizt. Durch die Umströmung des Sensorelements durch das Strömungsmedium findet ein Wärmetransport in das Strömungsmedium statt, der von der Strömungsgeschwindigkeit abhängt. Durch Messung der elektrischen Größen kann so auf die Strömungsgeschwindigkeit geschlossen werden.

Es ist bekannt, zur Messung des Massenstroms von Fluiden, insbesondere von Gasen bei wechselnder Temperatur, thermische Anemometer, bei denen zwei temperaturabhängige elektrische Widerstände, meist in Form von Dünnfilmwiderständen oder Drähten, zusammen mit zwei temperaturunabhängigen elektrischen Widerständen in einer Brücke geschaltet sind, zu verwenden. Eine elektrische Regelschaltung beeinflusst die Betriebsspannung der Brücke so, dass einer der temperaturabhängigen Widerstände elektrisch auf eine Übertemperatur bezüglich des unbeheizten temperaturabhängigen Widerstands bzw. der Mediumstemperatur beheizt wird.

Eine derartige Vorrichtung zur thermischen Massenstrommessung ist z.B in der US 4 688 424 beschrieben.

Bei den bekannten Heißfilmanemometern wird der unbeheizte temperaturabhängige Widerstand passend zu dem beheizten temperaturabhängigen Widerstand abgeglichen (getrimmt). Die temperaturunabhängigen elektrischen Widerstände haben einen festen Wert. Wird nur der Temperaturfühler, d. h. der unbeheizte temperaturabhängige Widerstand getrimmt, hat dies eine Streuung der Übertemperatur des beheizten Widerstandes zur Folge. Des Weiteren dürfen sich die Temperaturkoeffizienten des Temperaturfühlers und des Heizelements, d. h. des beheizten Widerstandes nicht zu stark voneinander unterscheiden, damit alle Abgleichbedingungen der Messbrücke erfüllt sind. Die maximale Temperatur des Heizelements ist durch die verwendeten Materialien begrenzt. Eine möglichst hohe Übertemperatur ist jedoch gewünscht. Die durchschnittliche Heizerübertemperatur muss entsprechend der Übertemperaturstreuung in Abhängigkeit des Heizwiderstandes und der Temperaturkoeffizienten des Heizelements und des Temperaturfühlers niedriger gewählt werden.

Der Erfindung liegt die Aufgabe zugrunde, eine Vorrichtung zur thermischen Massenstrommessung, insbesondere zur Messung der einer Brennkraftmaschine zugeführten Luftmasse mit Heizelementen geringerer Übertemperaturstreuung zur Verfügung zu stellen.

Die Aufgabe wird durch eine Vorrichtung mit den Merkmalen aus Anspruch 1 gelöst. Vorteilhafte Ausgestaltungen bilden den Gegenstand der Unteransprüche.

Die erfindungsgemäße Vorrichtung zur thermischen Massenstrommessung, insbesondere zur Messung der einer Brennkraftmaschine eines Kraftfahrzeugs zugeführten Luftmasse weist einen temperaturabhängigen elektrisch beheizten Widerstand als Heizelement, einen temperaturabhängigen elektrischen Widerstand als Temperaturfühler zur Messung der Temperatur des Massenstroms und zwei Festwiderstände auf. Das Heizelement, der Temperaturfühler und die Festwiderstände sind in einer Wheatstone-Brücke miteinander verschaltet. Der Temperaturfühler ist mit einem weiteren Festwiderstand in Reihe geschaltet. Das Heizelement und der Temperaturfühler stehen in thermischem Kontakt mit dem strömenden Medium. Der Temperaturfühler und der mit ihm in Reihe geschaltete Festwiderstand sind passend zu dem Heizelement abgeglichen (getrimmt). Der Temperaturkoeffizient des mit dem Temperaturfühler in Reihe geschalteten Festwiderstands ist kleiner als der Temperaturkoeffizient des Temperaturfühlers.

Bei der Auslegung der Wheatstone-Brücke ist die zulässige Maximaltemperatur des Heizelements zu berücksichtigen, da bei zu hohen Temperaturen das Substrat des Heizelements beschädigt werden kann. Das Heizelement wird auf eine Übertemperatur gegenüber der Temperatur des strömenden Mediums gebracht. Da der Widerstand des Heizelements temperaturabhängig ist, muss die Verlustleistung variieren, damit die Übertemperatur des Heizelements nachgeführt werden kann, damit bei unterschiedlichen Umgebungstemperaturen jeweils der korrekte Massenstrom gemessen wird.

Die Übertemperatur der Heizelemente streut von Heizelement zu Heizelement. Durch das erfindungsgemäße Trimmen des Temperaturfühlers und des mit ihm in Reihe geschalteten Festwiderstands passend zu dem Heizelement kann die Übertemperaturstreuung minimiert werden. Eine geringere Streuung erlaubt es, eine höhere mittlere Übertemperatur zu wählen.

Der dem Temperaturfühler vorgeschaltete Widerstand weist einen kleineren Temperaturkoeffizienten auf als der Temperaturfühler. Dieser Widerstand dämpft die Widerstandserhöhung des Temperaturfühlers.

Die übrigen Festwiderstände müssen nicht getrimmt werden.

Die temperaturabhängigen Widerstände können aus Platin, Nickel, Molybdän oder anderen Metallen mit hoher Temperaturabhängigkeit des elektrischen Widerstands realisiert werden, wobei diese Beschichtungen in konventioneller Weise auf einem Trägermaterial aufgebracht werden. Das Trägermaterial und die Metallschicht können hierbei entsprechend konfektioniert werden, wobei eine Trimmung der Elemente auf einen Sollwiderstand in bekannter Art und Weise vorgenommen werden kann.

In einer bevorzugten Ausgestaltung sind der Temperaturfühler und der mit ihm in Reihe geschaltete Festwiderstand gemeinsam auf dem gleichen Substrat gefertigt, wodurch die Herstellung günstiger und einfacher erfolgen kann. In diesem Fall können der Temperaturfühler und der mit ihm in Reihe geschaltete Festwiderstand integriert ausgebildet sein, wodurch sie auch gemeinsam in einem Abgleichvorgang, z. B. von einem Lasertrimmer, passend zu dem Heizelement abgeglichen (getrimmt) werden können. Dies ist deutlich kostengünstiger, als den Festwiderstand in einem separaten Verfahren passend zu dem Heizelement zu trimmen.

Das Heizelement und der Temperaturfühler können gemeinsam auf einem Substrat gefertigt sein. Dies vereinfacht die Herstellung und gewährleistet, dass ihre Temperaturkoeffizienten dicht beieinander liegen.

Bevorzugt sind der Temperaturfühler und das Heizelement auf einem Glassubstrat gefertigt. Das Glassubstrat besitzt eine hohe Temperaturbeständigkeit und ist kostengünstig zu beschaffen.

Der Temperaturfühler und das Heizelement können aber auch auf unterschiedlichen Substraten gefertigt sein, da die erfindungsgemäße Vorrichtung ein stärkeres Abweichen ihrer Temperaturkoeffizienten voneinander erlaubt. Hierdurch erhält man eine höhere Flexibilität bei der Materialauswahl und der Herstellung.

In einer bevorzugten Ausgestaltung sind der Temperaturfühler und das Heizelement durch einen auf ein Substrat aufgesputterten Molybdän-Mäander gebildet. So werden kompakte und kostengünstige Bauteile erreicht.

Der Temperaturfühler und das Heizelement können gleiche oder auch unterschiedliche Temperaturkoeffizienten aufweisen. Gleiche Temperaturkoeffizienten verbessern die Messgenauigkeit. Da die erfindungsgemäße Vorrichtung sich stärker unterscheidende Temperaturkoeffizienten erlaubt, wird die Flexibilität bei der Materialauswahl und der Herstellung erhöht. Bevorzugt ist der Temperaturkoeffizient des mit dem Temperaturfühler in Reihe geschalteten Festwiderstands wesentlich kleiner als der Temperaturkoeffizient des Temperaturfühlers. Er kann bevorzugt um einen Faktor 5 bis zu einem Faktor 20 kleiner sein. Je kleiner der Temperaturkoeffizient des mit dem Temperaturfühler in Reihe geschalteten Festwiderstands ist, desto besser ist seine steuernde Wirkung auf den Temperaturfühler.

Eine bevorzugte Ausgestaltung der erfindungsgemäßen Vorrichtung wird anhand der nachfolgenden Figuren näher erläutert.
- Fig. 1: zeigt ein Schaltbild der erfindungsgemäßen Vorrichtung.
- Fig. 2: zeigt einen erfindungsgemäßen Temperaturfühler mit vorgeschaltetem Widerstand in der Draufsicht.
- Fig. 3: zeigt ein erfindungsgemäßes Heizelement in der Draufsicht.
- Fig. 4: zeigt eine Anordnung einer Vielzahl erfindungsgemäßer Temperaturfühler und Heizelemente.

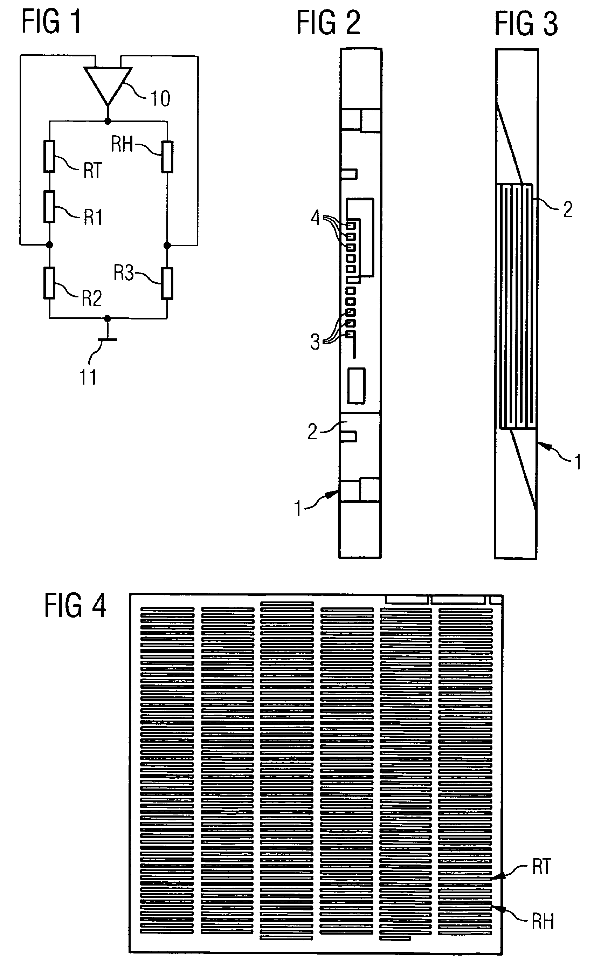

Die in Fig. 1 dargestellte Brückenschaltung findet bei der Messung der einer nicht gezeigten Brennkraftmaschine zugeführten Luftmasse Verwendung und weist einen beheizten temperaturabhängigen elektrischen Widerstand RH auf, der der kühlenden Wirkung eines zu messenden strömenden Mediums ausgesetzt ist. Die Schaltung weist weiterhin einen unbeheizten temperaturabhängigen elektrischen Widerstand auf, der als Temperaturfühler RT zur Messung der Temperatur des strömenden Mediums ebenfalls in thermischem Kontakt mit dem Medium steht. Der Widerstand RH ist ein Heizelement, das auf einer Übertemperatur zur Umgebungstemperatur gehalten wird. Die benötigte Heizleistung des Heizelements ist als Maß für die durchströmende Luftmasse auswertbar. Zum Heizelement RH liegt ein Festwiderstand R3 in Reihe, während dem Temperaturfühler RT zwei einzelne Festwiderstände R1 und R2 nachgeschaltet sind. Ein Operationsverstärker 10 erhält als Eingangssignal das Differenzsignal zwischen dem Verbindungspunkt der Widerstände R1 und R2 und dem Verbindungspunkt der Widerstände RH und R3. Ausgangsseitig steht der Verstärker 10 mit der Verbindungsstelle des Temperaturfühlers RT und des Heizelements RH in Verbindung. Zwischen den Widerständen R2 und R3 liegt die Masse 11. Die Anordnung stellt somit eine Widerstandsbrücke dar, deren aufgebrachte Heizleistung am Heizelement ein Maß für den Luftmassenstrom ist.

In Fig. 2 ist eine Kombination von zwei trimmbaren Widerständen mit unterschiedlichen Temperaturkoeffizienten auf einem Temperaturfühlelement zu sehen. Die gezeigte Anordnung aus auf einem Substrat 1 angeordneten Leiterbahnen 2 entspricht der Kombination aus Temperaturfühler RT und dem Widerstand R1. Über Trimmschleifen 3 ist durch Auftrennen von Trimmstellen 4 der Widerstand einstellbar.

Fig. 3 zeigt ein Heizelement RH aus einem auf einem Substrat 1 ausgesputterten Molybdän-Mäander, der die Leiterbahn 2 bildet.

Fig. 4 zeigt eine Anordnung erfindungsgemäßer Temperaturfühler RT und Heizelemente RH, wobei in einer Spalte jeweils 10 Temperaturfühler RT und 10 Heizer RH im Wechsel untereinander angeordnet sind.

## Patentansprüche

1. Vorrichtung zur thermischen Massenstrommessung, insbesondere zur Messung der einer Brennkraftmaschine zugeführten Luftmasse, umfassend
- einen temperaturabhängigen elektrisch beheizten Widerstand als Heizelement (RH),
- einen temperaturabhängigen elektrischen Widerstand als Temperaturfühler (RT) zur Messung der Temperatur des Massenstroms und
- zwei Festwiderstände (R2, R3), wobei
- das Heizelement (RH), der Temperaturfühler (RT) und die Festwiderstände (R2, R3) in einer Wheatstone-Brücke verschaltet sind,
- ein weiterer Festwiderstand (R1) mit dem Temperaturfühler (RT) in Reihe geschaltet ist,
- das Heizelement (RH) und der Temperaturfühler (RT) in thermischem Kontakt mit dem strömenden Medium stehen,
- der Temperaturfühler (RT) und der Festwiderstand (R1) gemeinsam auf dem gleichen Substrat gefertigt sind sowie gemeinsam in einem Abgleichvorgang passend zu dem Heizelement (RH) abgeglichen sind, und
- der Temperaturkoeffizient des Festwiderstands (R1) ist um einen Faktor 5 bis Faktor 20 kleiner als der Temperaturkoeffizient des Temperaturfühlers (RT).

2. Vorrichtung nach Anspruch 1, **dadurch gekennzeichnet, dass** das Heizelement (RH) und der Temperaturfühler (RT) gemeinsam auf einem Substrat gefertigt sind.

3. Vorrichtung nach Anspruch 2, **dadurch gekennzeichnet, dass** der Temperaturfühler (RT) und das Heizelement (RH) auf einem Glassubstrat gefertigt sind.

4. Vorrichtung nach Anspruch 1, **dadurch gekennzeichnet, dass** der Temperaturfühler (RT) und das Heizelement (RH) auf unterschiedlichen Substraten gefertigt sind.

5. Vorrichtung nach einem der Ansprüche 1 bis 4, **dadurch gekennzeichnet, dass** der Temperaturfühler (RT) und das Heizelement (RH) durch einen auf ein Substrat aufgesputterten Molybdän-Mäander gebildet sind.

6. Vorrichtung nach einem der Ansprüche 1 bis 5, **dadurch gekennzeichnet, dass** der Temperaturfühler (RT) und das Heizelement (RH) gleiche Temperaturkoeffizienten aufweisen.

7. Vorrichtung nach einem der Ansprüche 1 bis 5, **dadurch gekennzeichnet, dass** der Temperaturfühler (RT) und das Heizelement (RH) unterschiedliche Temperaturkoeffizienten aufweisen.

8. Vorrichtung nach einem der vorhergehenden Ansprüche, **dadurch gekennzeichnet, dass** jeweils zehn Temperaturfühler (RT) und zehn Heizelemente (RH) im Wechsel untereinander angeordnet sind.

## Claims

1. Device for thermal mass flow measurement, in particular for measuring the air mass being supplied to an internal combustion engine, comprising
- a temperature-dependent, electrically heated resistor as a heating element (RH),
- a temperature-dependent electrical resistor as a temperature sensor (RT) for measuring the temperature of the mass flow, and
- two fixed resistors (R2, R3), wherein
- the heating element (RH), the temperature sensor (RT) and the fixed resistors (R2, R3) are connected in a Wheatstone bridge,
- a further fixed resistor (R1) is connected in series to the temperature sensor (RT),
- the heating element (RH) and the temperature sensor (RT) are in thermal contact with the flowing medium,
- the temperature sensor (RT) and the fixed resistor (R1) are fabricated together on the same substrate and are adjusted together in one adjustment process so as to match the heating element (RH), and
- the temperature coefficient of the fixed resistor (R1) is smaller by a factor of 5 to a factor of 20 than the temperature coefficient of the temperature sensor (RT).

2. Device according to Claim 1, **characterized in that** the heating element (RH) and the temperature sensor (RT) are fabricated together on a substrate.

3. Device according to Claim 2, **characterized in that** the temperature sensor (RT) and the heating element (RH) are fabricated on a glass substrate.

4. Device according to Claim 1, **characterized in that** the temperature sensor (RT) and the heating element (RH) are fabricated on different substrates.

5. Device according to one of Claims 1 to 4, **characterized in that** the temperature sensor (RT) and the heating element (RH) are formed by a molybdenum meander which is sputtered onto a substrate.

6. Device according to one of Claims 1 to 5, **characterized in that** the temperature sensor (RT) and the heating element (RH) have the same temperature coefficients.

7. Device according to one of Claims 1 to 5, **characterized in that** the temperature sensor (RT) and the heating element (RH) have different temperature coefficients.

8. Device according to one of the preceding claims, **characterized in that** ten temperature sensors (RT) and ten heating elements (RH) are arranged in an alternating fashion with respect to one another in each case.

## Revendications

1. Dispositif de mesure thermique de courant massique, notamment de mesure de la masse d'air envoyée à un moteur à combustion interne, comprenant
- une résistance chauffée électriquement en fonction de la température comme élément (RH) chauffant,
- une résistance électrique, qui dépend de la température, comme sonde (RT) de température, pour la mesure de la température du courant massique et
- deux résistances (R2, R3) fixes, dans lequel
- l'élément (RH) chauffant, la sonde (RT) de température et les résistances (R2, R3) fixes sont câblés en un pont de Wheatstone,
- une autre résistance (R1) fixe est montée en série avec la sonde (RT) de température,
- l'élément (RH) chauffant et la sonde (RT) de température sont en contact thermique avec le fluide en écoulement,
- la sonde (RT) de température et la résistance (R1) fixe sont fixées ensemble sur le même substrat ainsi qu'équilibrées ensemble dans une opération d'équilibrage en s'adaptant à l'élément (RH) chauffant, et
- le coefficient de température de la résistance (R1) fixe est plus petit d'un facteur de 5 à un facteur de 20 que le coefficient de température de la sonde (RT) de température.

2. Dispositif suivant la revendication 1, **caractérisé en ce que** l'élément (RH) chauffant et la sonde (RT) de température sont fixés en commun sur un substrat.

3. Dispositif suivant la revendication 2, **caractérisé en ce que** la sonde (RT) de température et l'élément (RH) chauffant sont fixés sur un substrat en verre.

4. Dispositif suivant la revendication 1, **caractérisé en ce que** la sonde (RT) de température et l'élément (RH) chauffant sont fixés sur des substrats différents.

5. Dispositif suivant l'une des revendications 1 à 4, **caractérisé en ce que** la sonde (RT) de température et l'élément (RH) chauffant sont formés par un méandre en molybdène déposé par pulvérisation cathodique sur un substrat.

6. Dispositif suivant l'une des revendications 1 à 5, **caractérisé en ce que** la sonde (RT) de température et l'élément (RH) chauffant ont les mêmes coefficients de température.

7. Dispositif suivant l'une des revendications 1 à 5, **caractérisé en ce que** la sonde (RT) de température et l'élément (RH) chauffant ont des coefficients de température différents.

8. Dispositif suivant l'une des revendications précédentes, **caractérisé en ce que** respectivement dix sondes (RT) de température et dix éléments (RH) chauffants sont disposés en alternance entre eux.
